(19) Europäisches Patentamt / European Patent Office / Office européen des brevets

(11) **EP 2 319 958 A1**

(12) **EUROPEAN PATENT APPLICATION**
published in accordance with Art. 153(4) EPC

(43) Date of publication:
**11.05.2011 Bulletin 2011/19**

(51) Int Cl.:
*C25B 1/04* (2006.01)     *C01B 3/04* (2006.01)

(21) Application number: **09809652.2**

(22) Date of filing: **18.05.2009**

(86) International application number:
**PCT/JP2009/059126**

(87) International publication number:
**WO 2010/023997 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **01.09.2008 JP 2008223632**
**21.11.2008 JP 2008297824**

(71) Applicant: **Japan Techno Co., Ltd**
**Ota-ku**
**Tokyo 146-0085 (JP)**

(72) Inventor: **OMASA, Ryushin**
**Fujisawa-shi**
**Kanagawa 251-0033 (JP)**

(74) Representative: **Gervasi, Gemma et al**
**Notarbartolo & Gervasi S.p.A.**
**Corso di Porta Vittoria 9**
**20122 Milano (IT)**

(54) **LIQUID MATERIAL COMPRISING HYDROGEN AND OXYGEN, REGASIFIED GAS COMPRISING HYDROGEN AND OXYGEN PRODUCED FROM THE LIQUID MATERIAL, PROCESS AND APPARATUS FOR PRODUCING THE LIQUID MATERIAL AND REGASIFIED GAS, AND FUEL THAT DOES NOT EVOLVE CARBON DIOXIDE AND COMPRISES THE LIQUID MATERIAL AND REGASIFIED GAS**

(57)     A liquid material comprising hydrogen and oxygen is produced by electrolyzing an electrolysis solution containing 5 to 30 % by weight of an electrolyte in an electrolysis tank using a group of electrodes disposed, within the electrolysis tank, while maintaining a spacing of 3 to 10 mm between adj acent electrodes under conditions of a current density of 5 to 20 A/dm$^2$, a bath temperature of 20 to 70°C, and pH 14 or more (strongly alkaline) while applying vibration stirring, bringing the pressure of the resultant gas comprising hydrogen and oxygen to 0.1 to 0.5 MPa, and cooling the gas to -190 to -250°C to liquefy the gas. The liquid material is stored, is returned to room temperature, and is gasified to produce a regasified gas comprising hydrogen and oxygen.

FIG.1

EP 2 319 958 A1

## Description

{Technical Field}

The present invention relates to a liquid material obtained from a gas composed of oxygen and hydrogen obtained by electrolysis under vibratory agitation, a regasified gas composed of oxygen and hydrogen obtained from the liquid material, a manufacturing method and device thereof, and a fuel which is composed of the liquid material and/or regasified gas and does not generate a carbonic acid gas when burning.

{Background Art}

When water is electrolyzed, a hydrogen gas and an oxygen gas are respectively generated from a cathode and an anode. Nowadays, this is in the spotlight owing to arrival of hydrogen energy generation. However, a main trend in conventional methods is that a hydrogen gas is extracted and separated from an oxygen gas, and only the hydrogen gas is used while the oxygen gas is disposed of. This is because a mixture of hydrogen and oxygen gases explodes under a low atmospheric pressure of 2 to 3 atm. Usually, this mixture gas is called a detonating gas. Therefore, pressing of a mixture gas of hydrogen and oxygen is prohibited under the Security Regulation for General High-Pressure Gas, Section 9 in Japan.

Conventionally, a mixture gas of hydrogen and oxygen is called a Brown's gas, This technology relates to developments achieved by Dr. Yull Brown in Brown Energy System Technology PTY. LTD. in Australia. See PTL 1.

The Brown's gas is known to have a property of standing compression up to 5 $kgf/cm^2$ and changes back to water when the gas is pressed much, as described in PTL 2, page 6, column 9, lines 5 to 8.

Meanwhile, the present inventor has proposed, in PTLs 3 to 5, techniques for manufacturing hydrogen and oxygen gases by using a vibratory agitation means. Regardless of containing only hydrogen and oxygen as components, a gas composed of hydrogen and oxygen obtained according to any of these methods is incredibly far more stable compared with a gas composed of hydrogen and oxygen which is obtained according to known conventional methods.

{Citation List}

{Patent Literature}

> {PTL 1} JP-U-3037633
> {PTL 2} JP-A-2002-348694
> {PTL 3} WO 021490G21 A1
> {PTL 4} WO 03/048424 A1
> {PTL 5} JP-A-2005-232512

{Summary of Invention}

{Technical Problem}

However, a range of use is greatly limited with only an embodiment of directly using a gas generated by using techniques disclosed in PTLs 3 to 5.

If a gas composed of hydrogen and oxygen obtained by electrolyzing water under vibratory agitation is liquidized, stored, and further regasified again, use applications are enhanced limitlessly insofar as the regasified gas has the same physical properties and maintains a property of no explosion risk.

The present invention has a first object of providing a method and a device for manufacturing a liquid material, and of providing the liquid material itself, wherein the liquid material is composed of hydrogen and oxygen and obtained from a gas composed of hydrogen and oxygen obtained by electrolyzing water under vibratory agitation, without losing peculiar properties to the gas, apart from conventional techniques of liquidizing hydrogen and oxygen separately.

The present invention has a second object of providing a method and a device for manufacturing a liquid material composed of hydrogen and oxygen without losing peculiar properties to a gas composed of hydrogen and oxygen obtained by electrolyzing water under vibratory agitation, for storing the liquid material for a required time period in the state of liquid, and for regasifying the liquid material at a required time point, and of providing a regasified gas composed of hydrogen and oxygen obtained by the method and device.

The present invention has a third object of providing a fuel which does not generate a carbonic acid gas at all when burning.

{Solution to Problem}

According to the present invention to achieve the aforementioned first object, there is provided a manufacturing method for manufacturing a liquid material composed of hydrogen and oxygen, wherein an electrolytic solution containing an electrolyte of 5 to 30 weight % is electrolyzed in an electrolytic bath by use of an electrode group provided at an interval of 3 to 10 mm in the electrolytic bath under conditions of an electric current density of 5 to 20 A/dm$^2$, a bath temperature of 20 to 70°C, and strong alkali, while subjecting the electrolytic solution to vibratory agitation, and a gas composed of hydrogen and oxygen which is thereby generated is liquidized by cooling.

According to an aspect of the invention, when liquidizing the gas composed of hydrogen and oxygen, cooling is performed with the pressure of the gas set at 0.1 to 0.5 MPa. According to another aspect of the invention, when liquidizing the gas composed of hydrogen and oxygen, cooling to -190 to -250°C is performed. According to still another aspect of the invention, the condition of strong alkali described above corresponds to pH 14 or more.

Further, according to the present invention to achieve the aforementioned first object, there is provided a manufacturing device for manufacturing a liquid material composed of hydrogen and oxygen, the device being used for practicing or executing the above-mentioned method for manufacturing the liquid material, the device comprising:

(A) an electrolytic bath;
(B) an electrode group provided at an interval of 3 to 10 mm in the electrolytic bath;
(C) a vibratory agitation unit for subjecting an electrolytic solution in the electrolytic bath to vibratory agitation;
(D) a collection unit for collecting a generated gas composed of hydrogen and oxygen; and
(E) a liquidizing unit for liquidizing the collected gas composed of hydrogen and oxygen by cooling.

According to an aspect of the liquid material composed of hydrogen and oxygen according to the present invention, which is manufactured by the above-mentioned manufacturing method for manufacturing the liquid material composed of hydrogen and oxygen, the hydrogen and oxygen exist as liquid materials under conditions of -190 to -250°C and 3 to 3 00 kgf/cm$^2$ . In the present specification, MPa and kgf/cm$^2$ are used as units expressing pressures. However, these pressures are described supposing that 0.1 MPa is substantially equivalent to 1 kgf/cm$^2$.

Also, according to the present invention to achieve the aforementioned second object, there is provided a manufacturing method for manufacturing a regasified gas composed of hydrogen and oxygen, wherein the liquid material composed of hydrogen and oxygen, which is manufactured by the above-mentioned manufacturing method for manufacturing the liquid material composed of hydrogen and oxygen, is stored and thereafter gasified.

According to an aspect of the invention, heating is performed when gasifying the liquid material composed of hydrogen and oxygen. According to another aspect of the invention, the temperature of the liquid material is returned to a normal temperature by the heating.

Further, according to the present invention to achieve the aforementioned second object, there is provided a manufacturing device for manufacturing a regasified gas composed of hydrogen and oxygen, the device being used for practicing or executing the above-mentioned manufacturing method for manufacturing a regasified gas composed of hydrogen and oxygen, the device comprising:

(A) an electrolytic bath;
(B) an electrode group provided at an interval of 3 to 10 mm in the electrolytic bath;
(C) a vibratory agitation unit for subjecting an electrolytic solution in the electrolytic bath to vibratory agitation;
(D) a collection unit for collecting a generated gas composed of hydrogen and oxygen;
(E) a liquidizing unit for liquidizing the collected gas composed of hydrogen and oxygen by cooling;
(F) a storage unit for storing a liquid material obtained by the liquidizing unit, and
(G) a regasifying unit for regasifying the liquid material.

According to an aspect of the regasified gas composed of hydrogen and oxygen according to the present invention, which is manufactured by the above-mentioned manufacturing method for manufacturing the regasified gas composed of hydrogen and oxygen, hydrogen and oxygen do not substantially react with each other under a pressure of 3 to 300 kgf/cm$^2$ but exist stably in gas states in a metal container.

Also according to the present invention to achieve the aforementioned third object, there is provided a fuel which is composed of the above-mentioned liquid material composed of hydrogen and oxygen and/or the above-mentioned regasified gas composed of hydrogen and oxygen, and generates no carbonic acid gas at all while burning.

{Advantageous Effects of Invention}

According to the present invention, there are provided a method and a device for manufacturing a liquid material, and the liquid material itself, wherein the liquid material is composed of hydrogen and oxygen and obtained from a gas (initial gas) composed of hydrogen and oxygen obtained by electrolyzing water under vibratory agitation, without losing peculiar properties to the initial gas.

Also according to the present invention, there are provided a method and a device for storing the above-mentioned liquid material for a required time period in the state of liquid and regasifying the liquid material at a required time point, and there is also provided a regasified gas composed of hydrogen and oxygen obtained by such method and device.

Further according to the present invention, there is provided a fuel which which is composed of the above-mentioned liquid material composed of hydrogen and oxygen and/or the above-mentioned regasified gas composed of hydrogen and oxygen, and generates no carbonic acid gas at all while burning.

The initial gas composed of hydrogen and oxygen, which is obtained by electrolysis of water under vibratory agitation, is liquidized to obtain a liquid material composed of hydrogen and oxygen. The liquid material is stored and is regasified to obtain a regasified gas composed of hydrogen and oxygen. The regasified gas has the same physical properties as the initial gas, and has an extremely low explosion risk.

Accordingly, the liquid material composed of hydrogen and oxygen and the regasified gas composed of hydrogen and oxygen according to the present invention are applicable to an extremely wide range of use.

{Brief Description of Drawings}

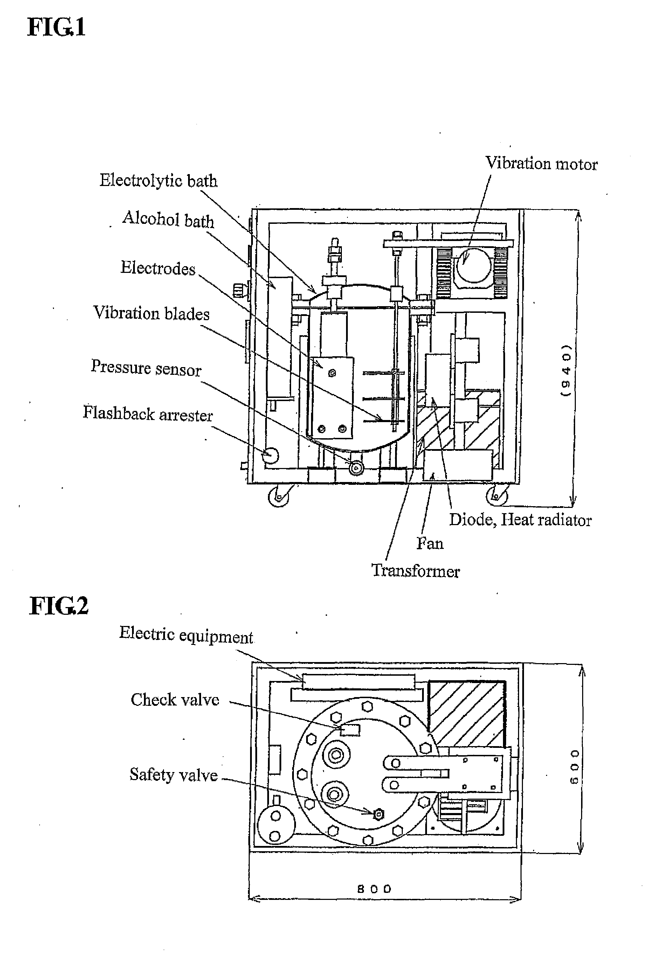

{FIG. 1} A schematic cross-sectional view of an electrolytic device including a vibratory agitation unit used in an example.

{FIG. 2} A top view of the electrolytic device shown in FIG. 1.

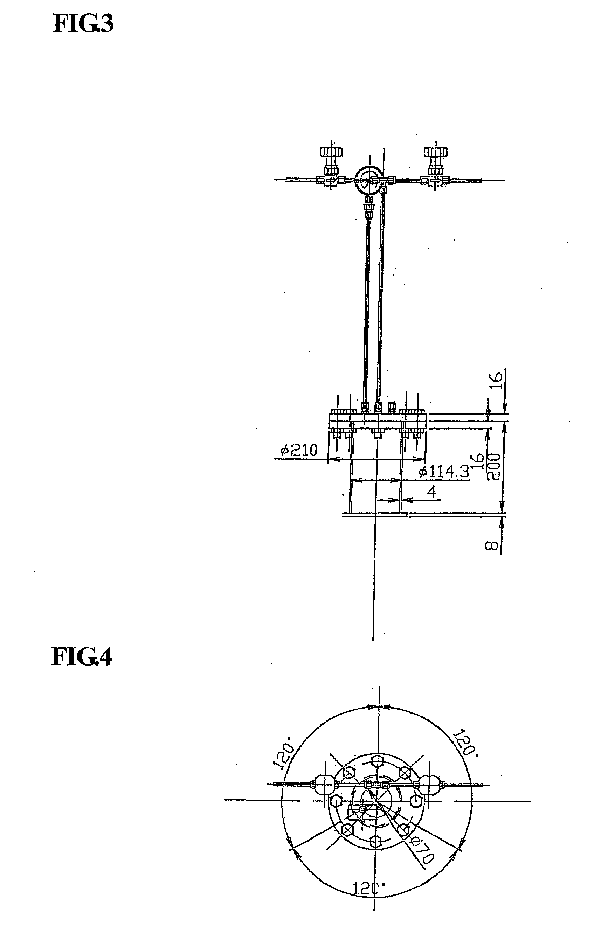

{FIG. 3} A cross-sectional view of a gas cylinder made of SUS304.

{FIG. 4} A top view of the gas cylinder made of SUS304 shown in FIG 3.

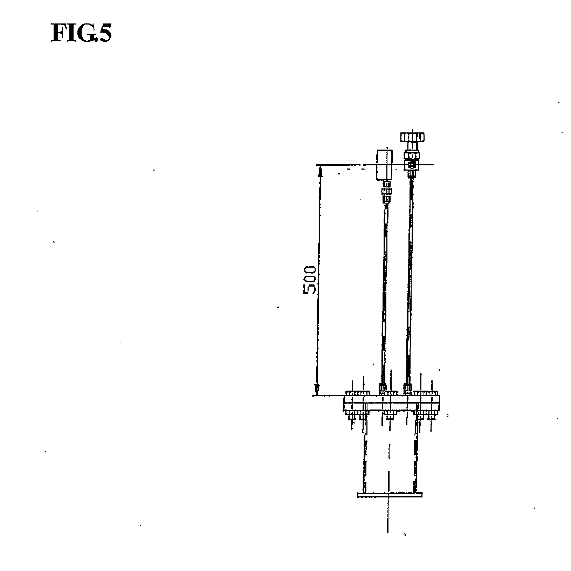

{FIG. 5} A side view of the gas cylinder made of SUS304 shown in FIG 3.

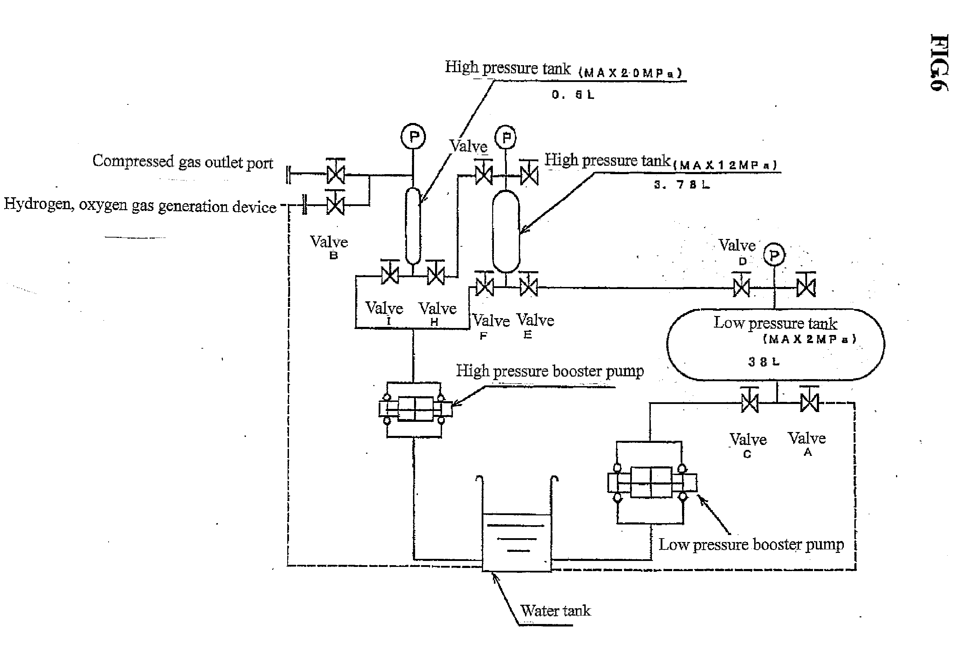

{FIG. 6} A configuration diagram of a gas compression device.

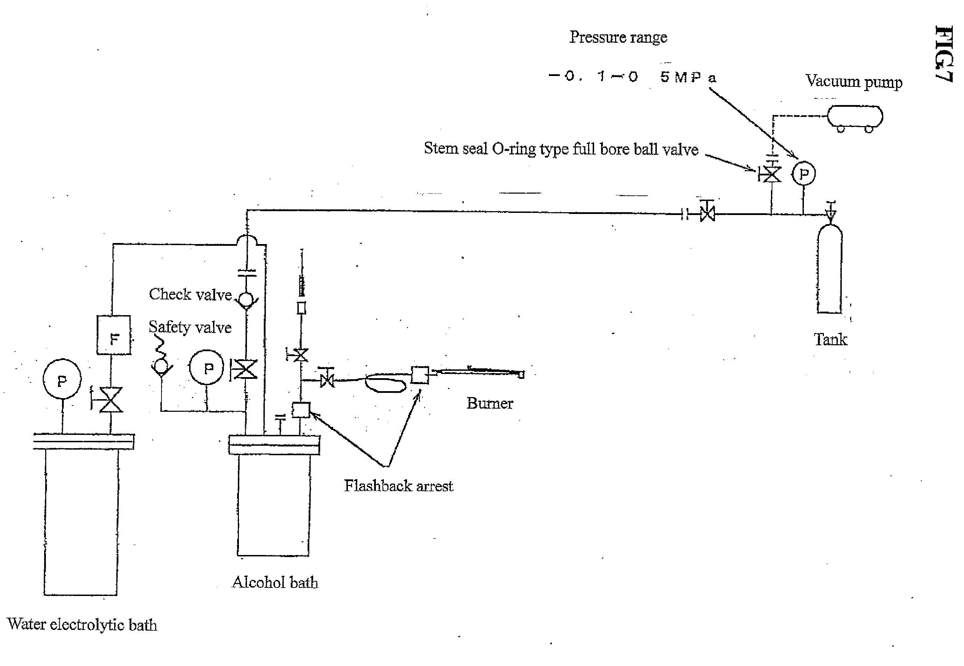

{FIG. 7} A configuration diagram of a combustion device used in the example.

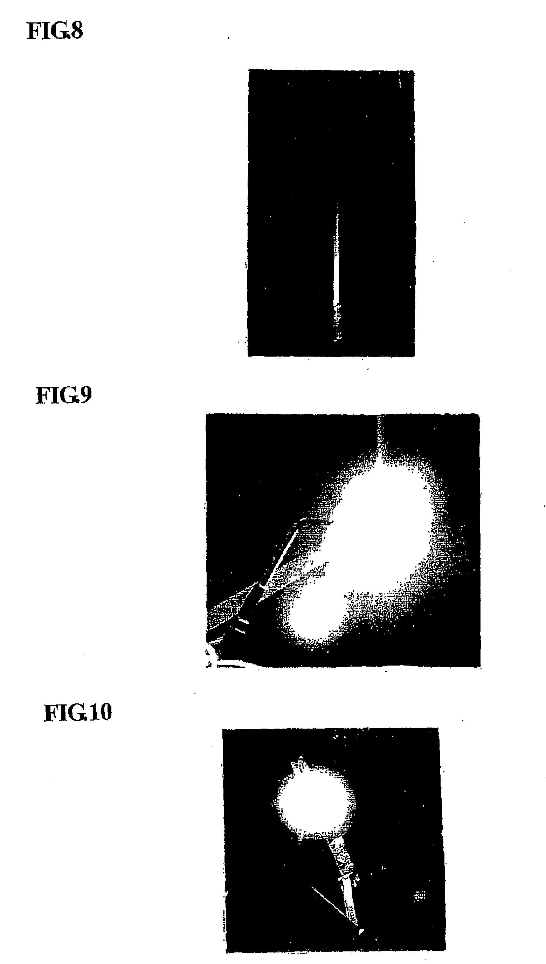

{FIG. 8} A view representing a state of a flame obtained by burning a gas composed of hydrogen and oxygen, which is obtained by electrolysis under vibratory agitation.

(FIG. 9} A view representing a melting state and a gasifying state of a titanium plate caused by a flame obtained by burning a gas composed of hydrogen and oxygen, which is obtained by electrolysis under vibratory agitation.

{FIG. 10} A view representing a melting state and a gasifying state of a tantalum plate caused by a flame obtained by burning a gas composed of hydrogen and oxygen, which is obtained by electrolysis under vibratory agitation.

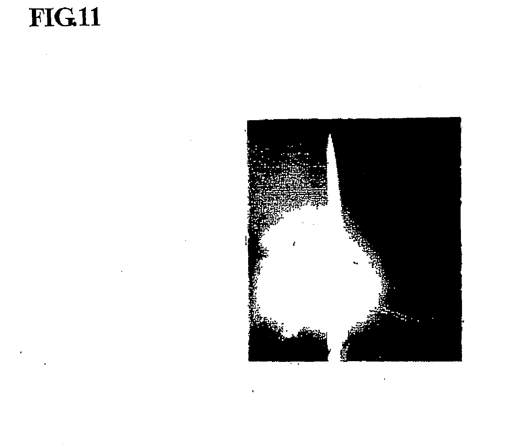

{FIG. 11} A view representing a melting state and a gasifying state of a tungsten rod caused by a flame obtained by burning a gas composed of hydrogen and oxygen, which is obtained by electrolysis under vibratory agitation.

{Description of Embodiments}

In the present invention, an electrolytic solution is electrolyzed in an electrolytic bath under vibratory agitation, thereby to generate an initial gas composed of hydrogen and oxygen. Techniques which can be used to generate such an initial gas are described in PTLs, e,g., Japanese Patent Nos 1941498, 2707530, 2762388, 2767771, 2852878, 2911350, 2911393, 3035114, 3142417, 3196890, 332084 and 3854006, JP-A-10-309453, JP-A-11-253782, JP-A-2000-317295, JP-A-2001-288591, JP-A-2002-53999, JP-A-2002-121699, JP-A-2002-146597, JP-A-2005-232512, WO 02/090621 A1, WO 03/048424 A1, and WO 2004/092059 A1, which relates to inventions of the present invention.

Practicable vibratory agitation conditions are conditions described in the foregoing PTLs.

The electrolysis is practicable under conditions described in the foregoing PTLs. Particularly in the present invention, an electrolytic solution containing an electrolyte of 5 to 30 weight % is employed, and a group of electrodes is located in the electrolytic bath at intervals of 3 to 10 mm. Applied conditions are a current density of 5 to 20 A/dm$^2$, a bath temperature of 20 to 70°C, and strong alkali.

The electrolyte employed in the present invention is not particularly limited, and NaOH or KOH is usually employed. Water to dissolve such an electrolyte and prepare an electrolytic solution may be of any type, and ion-exchanged water or distilled water is usually employed. The concentration of the electrolyte in the electrolytic solution is not particularly limited but is generally 30 weight % or lower, preferably 25 weight % or lower, or most preferably 15 to 25 weight %. In the present invention, if the concentration of the electrolyte is less than 5 weight %, electric current flow decreases thereby increasing resistance, and electric current efficiency decreases thereby further causing increase in temperature. Consequently, decrease in generation amount of the initial gas further results. If the concentration of the electrolyte is far more than 30 weight %, the electrolyte is deposited on the electrode plate, and electrolysis efficiency decreases as a result.

In the present invention, if the current density is increased, electrolysis efficiency preferably increases in one aspect while the bath temperature simultaneously increases thereby adversely decreasing the generation amount of the initial gas. In the present invention, a range of 5 to 20 A/dm$^2$ has been found to be totally suitable from a large number of experimental results.

In the present invention, a range of 20 to 70°C has been found to be suitable for the bath temperature in consideration of long time operation, a generation amount of the initial gas, electrolysis efficiency, etc., from a large number of experimental results.

The value of pH depends on the electrolyte used. A suitable pH value is correlative to electrolyte, electric current density, and bath temperature. Also in the present invention, the best efficiency has resulted under a condition of strong alkali of preferably pH 14 or higher, as a result of repeatedly carried out experiments in various conditions concerning electrolyte, electric current density, bath temperature, etc.

Also in the present invention, electrodes constituting the electrode group are preferably maintained at a constant interval. This interval is 3 to 10 mm, preferably 3 to 5 mm. The number of electrodes constituting the electrode group is preferably between 4 and 1000.

The initial gas composed of hydrogen and oxygen which is generated as described above can be compressed to 3 to 300 kgf/cm$^2$. A storage device (tank or gas cylinder) can be downsized by highly compressing a pressure of the initial gas to 3 to 300 kgf/cm$^2$, and accordingly can be easily transported and mounted. The compression range of 3 to 300 kgf/cm$^2$ is suitable for practicing the initial gas. In the present invention, when liquidizing the initial gas, the pressure of the initial gas is set to 0.1 to 0.5 MPa (preferably 0.1 to 0.3 MPa), and the initial gas is cooled to -190 to -250°C. That is, if an initial gas is stored under a higher pressure than this range, the pressure of the initial gas is decreased to 0.1 to 0.5 MPa, and cooling is then performed.

There may be used the same devices as described in the foregoing PTLs for (A) the electrolytic bath, (B) the electrode group provided at an interval of 3 to 10 mm in the electrolytic bath, (C) the vibratory agitation unit for subjecting an electrolytic solution in the electrolytic bath to vibratory agitation, and (D) the unit for collecting a generated gas composed of hydrogen and oxygen.

As (E) the unit for liquidizing the collected gas composed of hydrogen and oxygen by cooling, a combination of a compression device which will be described later and a cooling device wherein liquid helium is used as a coolant may be employed.

The initial gas composed of hydrogen and oxygen, which was obtained by electrolysis under vibratory agitation, was stored in a container made of stainless steel under pressure of 0.54 MPa, and was cooled to -222°C by liquid helium. Then, there occurred a greater pressure drop to -0.03 MPa than a pressure drop caused by cooling. As can be understood from this simple test, a fact that a pressure drop occurred exceeding a volume reduction caused by cooling proves that the gas was safely liquidized. Therefore, the initial gas seems not to be a mixture of hydrogen and oxygen in molecular states like the Brown's gas but can be considered to have caused any covalent bond of hydrogen and oxygen.

This fact complies with a phenomenon that the initial gas can be highly compressed to 20 to 30 MPa and no pressure drop occurred from compressed storage for six months using a gas cylinder made of stainless steel.

In the present invention, the liquid material composed of hydrogen and oxygen is stored for a desired period of time and then gasified (regasified) upon necessity, to obtain a regasified gas. When gasifying the liquid material, heating (including a natural temperature rise based on removal of a coolant) is performed, and preferably the temperature of the liquid material is returned to a normal temperature by heating.

There may be used the same devices as described above for the foregoing items (A) to (E) in the device used for practicing the method for manufacturing a regasified gas composed of hydrogen and oxygen.

As (F) the storage unit for storing the liquid material obtained by the liquidizing unit, a metal container (a gas cylinder or a tank) made of stainless steel can be used. As (G) the regasifying unit for regasifying the liquid material, a discharge device such as a nozzle or a burner which discharges the liquid material into air can be used.

The present inventor asked Hokkaido University and Nagoya University to carry out ingredient analysis of the initial gas composed of hydrogen and oxygen. Hence, atomic hydrogen (H), oxygen (O), a hydroxyl group (OH), and deuterium (D) were confirmed to be mixed in the initial gas, in addition to a hydrogen gas ($H_2$) and an oxygen gas ($O_2$). Thus, "composed of hydrogen and oxygen" which qualifies the regasified gas or liquid material and the initial gas in the present specification and claims is intended to mean being composed of a material containing, as components, hydrogen atoms (including deuterium atoms, tritium atoms, etc.) and oxygen atoms.

The regasified gas according to an aspect of the present invention has the same composition as a hydrogen-oxygen mixture gas described in JP-A-2005-232512.

Why accessory ingredients other than hydrogen and oxygen gases are mixed in by only physical operation of vibratory agitation will now be considered below. A key to answer this question is to change, into nanobubbles, a gas generated by electrolysis under vibratory agitation at a normal temperature under a normal pressure. The change into nanobubbles is exactly what produces new chemical reactions beyond conventional science, which lead to generation of a nonexplosive covalent bond gas.

The gas is nonexplosive regardless of being composed of hydrogen and oxygen because gasses of the accessory ingredients are generated, well balanced as a natural process which accompanies no artificial compulsion. The gasses of the accessory ingredients function as a buffer which prevents explosion caused by reaction between hydrogen and oxygen.

Sizes of generated bubbles extremely differ between electrolysis under vibratory agitation according to the present invention and conventional electrolysis. In electrolysis according to a conventional method, bubbles formed by oxygen and hydrogen gases have sizes of 1 to 5 mmφ which are visible for naked eyes. In contrast, in electrolysis according to the present invention under vibratory agitation, bubbles have sizes of 5 to 700 nm which are invisible for naked eyes, e.g., 20 to 700 nm or 5 to 200 nm, and water becomes to a state in which the entire water seems to be "milky".

For example, if a spark is created above an electrolytic solution being electrolyzed with use of an electrolytic bath having an opening of 1000 mm × 2000 mm, hydrogen and oxygen gases explode when creating a spark in case of the conventional electrolysis. However, a gas composed of hydrogen and oxygen, which is obtained by electrolysis under vibratory agitation according to the present invention, does not explode at all even if a spark is created.

When hydrogen obtained by the conventional electrolysis is stored in a metal gas cylinder (in place of a gas cylinder made of stainless steel used in examples, a metal gas cylinder made of steel, cast iron, or aluminum alloy may be used), the gas cylinder is embrittled by hydrogen or hydrogen escapes permeating through the metal gas cylinder. Therefore, long-term storage is impossible. However, a gas composed of hydrogen and oxygen, which is obtained by electrolysis under vibratory agitation, can be compressed under a high pressure (e.g., the gas could be compressed to 200 kgf/cm$^2$: 20 MPa without causing explosion). Besides, there is an actual result that a gas composed of hydrogen and oxygen, which was compressed and stored in a gas cylinder made of stainless steel under 10 MPa, did not cause hydrogen leakage at all even through long-term storage for six months but maintained initial pressure of 10 MPa.

According to conventional common sense, it is considered that, if a mixture gas composed of hydrogen and oxygen, which is obtained by electrolysis under vibratory agitation, is liquidized, features of this gas are lost and the gas changes to mere water as the Brown's gas does,.

However, the gas composed of hydrogen and oxygen, which is obtained by electrolysis under vibratory agitation, has been found to have a surprising property that, if the gas is liquidized by compression to 5 kgf/cm$^2$ and cooling to -220°C by using liquid helium, the gas does not return to mere water but a gas obtained by regasifying the liquid material returns to a gas (a regasified gas) having equivalent physical properties to the initial gas and exhibits the peculiar property again.

The Brown's gas is known to explode due to molecular friction between hydrogen and oxygen gases when compressed to 0.2 MPa or more. However, as described above, the gas composed of hydrogen and oxygen, which is obtained by electrolysis under vibratory agitation, has a peculiar property that the gas can be stored stably for a long period of time in a highly compressed state of 20 to 30 MPa and causes no explosion. These wonderful properties are not lost even after the gas is liquidized and thereafter regasified. That is, in case of the regasified gas according to the present invention, hydrogen and oxygen gases do not substantially react under a pressure of 3 to 300 kgf/cm$^2$ but these gases can exist stably in gas states in a container. Further, the liquid material according to the present invention can exist as a liquid under conditions of -190 to -250°C and 3 to 300 kgf/cm$^2$.

In conventional rocket fuels, hydrogen and oxygen are compressed, liquidized, and stored in separate tanks, respectively, because of danger. Hydrogen and oxygen are jetted and mixed immediately before use. Nevertheless, explosions often occurred in fact. In the gas composed of hydrogen and oxygen according to the present invention, hydrogen and oxygen are not mixed in molecular states but exist stably in a certain connection state. Therefore, the gas can be repeatedly gasified and liquidized, can be handled far more safely than in the conventional combustion systems of jetting and mixing liquid hydrogen and liquid oxygen, and further can be stored for a long period of time. Accordingly, application of the gas to a rocket fuel is available. In this manner, the gas can be expected to dramatically contribute to space engineering.

In addition, if the liquid material or regasified gas composed of hydrogen and oxygen according to the present invention is burnt, no carbonic acid gas is generated at all. Therefore, the liquid material or regasified gas is ideal clean energy. Further, what is generated as a result of combustion is water, i.e., an indispensable material for human being is supplied by burning the liquid material or regasified gas composed of hydrogen and oxygen according to the present invention.

A fuel formed of the liquid material or regasified gas composed of hydrogen and oxygen according to the present invention is capable of burning an emulsion (a water content of 70%) with an oil including a great amount of water.

If the liquid material or regasified gas composed of hydrogen and oxygen according to the present invention is used, tungsten can be gasified by heating for only one second or so. This suggests that the liquid material or regasified gas composed of hydrogen and oxygen according to the present invention has extremely high energy.

Since the liquid material or regasified gas composed of hydrogen and oxygen according to the present invention thus has extremely high energy, there is hidden potentiality that elemental transmutation can be caused by using the gas.

The device for manufacturing the liquid material or regasified gas composed of hydrogen and oxygen according to the present invention need not be provided with a diaphragm between electrodes because the liquid material or regasified gas obtained has an extremely low explosion risk.

The liquid material or regasified gas composed of hydrogen and oxygen according to the present invention is useful as a fuel for a fuel cell, and has resulted in electromotive force which is greater by 5 to 7 % than in case of using pure hydrogen as a fuel.

In particular, the liquid material or regasified gas composed of hydrogen and oxygen according to the present invention is useful as an energy source for gas electric power generator. For example, electric power was generated by supplying a portable gas electric power generator with a liquid material or regasified gas composed of hydrogen and oxygen according to the present invention with the pressure of the material or gas adjusted to 0.2 MPa. An engine worked comfortably and could lighten an electric bulb of 100 W. Therefore, use as an energy source for a gas electric power generator is expected.

The liquid material or regasified gas composed of hydrogen and oxygen according to the present invention in a highly compressed state can be directly used as a fuel for engines of vehicles and other machineries. As a result, reduction of $CO_2$ can be realized in a short period, and accordingly, prevention of global warming can be achieved instantaneously.

Further, the liquid material or regasified gas composed of hydrogen and oxygen according to the present invention can be used as a new clean fuel for home use, which will take the place of city gas or propane gas. Realization thereof is expected to come in the near future.

{Examples}

Hereinafter, the present invention will be described below with reference to examples. However, the examples do not limit the present invention at all.

An electrolytic device (gas generation device) comprising a vibratory agitation unit represented in FIGS. 1 to 2 was used. This device is equivalent to commercial "Hydrogen/Oxygen Gas (OHMASA-GAS) Generation Device" (manufactured by JAPAN TECHNO CO., LTD.) which is a product name. In an electrolytic bath of this device, KOH aqueous solution containing KOH of 15 weight % at a normal temperature was prepared. In accordance with device specifications, electrolysis was performed while the vibratory agitation unit was driven to supply vibration of 35 to 50 Hz to vibration blades. As a result of vibratory agitation caused by the vibration blades, gases electrolytically generated on the electrode group (cell) constituted by plural electrodes opposed to each other were changed into as small bubbles as cannot be observed with eyes, i.e., bubbles of nano sizes. The bubbles were dispersed into the solution and then discharged to the upper space of the electrolytic bath. In order to allow a burning flame of a gas composed of hydrogen and oxygen to be observable with eyes, a system was employed which burns the generated gas composed of hydrogen and oxygen after dipping the gas through an alcohol bath.

Reasons why the gas was dipped through the alcohol bath are to adjust a burning temperature and to put a gas composed of hydrogen and oxygen in a state observable with eyes by dipping the gas through an alcohol bath because this gas is colorless and transparent and its flame which is not observable with eyes is dangerous if the gas is burnt. Therefore, no alcohol bath is required insofar as no problem occurs if a combustion gas need not be observable with eyes.

The gas manufactured by a method as described above was subjected to a compression test, a leakage test, and a drop test as follows by an independent administrative agency BUILDING RESEARCH INSTITUTE.

<compression test>

A low pressure compression test was carried out in which a gas composed of hydrogen and oxygen obtained by electrolysis of water under vibratory agitation was injected into a gas cylinder made of stainless steel (SUS304) represented in FIGS. 3 to 5 under a pressure of 3 to 20 kgf/cm$^2$ applied. No explosion occurred.

More specifically, the low pressure compression test was carried out in a manner as follows by using a device represented in FIG. 6. FIG 6 represents a state before staring the low pressure compression test wherein states of valves were as follows:

Valve A: Close
Valve B: Close

Valve C: Open
Valve D: Open
Valve E: Close
Valve F: Open
Valve G: Open
Valve H: Close
Valve I: Open
Other valves: Close

After checking that the valves were put in the aforementioned states respectively, the low pressure compression test was carried out in an operation procedure as follows.

<Operation Procedure 1>

Open the valves B and E, close the valve F, open the valve H, and close the valve 1. Next, connect a water tank pipe (denoted by a broken line) to a joint port to a generation device of a gas composed of hydrogen and oxygen. Feed water to low and high pressure tanks by a low pressure booster pump, thereby to discharge air from both tanks. Close the valve B upon completion of the discharge.

<Operation Procedure 2>

Disconnect the water tank pipe (denoted by a broken line) connected, in accordance with the operation procedure 1, to the joint port to the generation device of the gas composed of hydrogen and oxygen. Connect thereto a gas pipe from the generation device of the gas composed of hydrogen and oxygen.
Close the valve C and open the valve A. Next, open the valve B to feed the gas composed of hydrogen and oxygen, and discharge water from the high and low pressure tanks. Close the valve A upon completion of the discharge of water, and inject the gas composed of hydrogen and oxygen into the tanks until the pressure of each tank reaches 0.2 MPa. Close the valve B upon completion of the injection.
A procedure for compression to a high pressure is as follows.

operation Procedure 3>

Open the valve C, and feed water to the low pressure tank by the low pressure booster pump to compress the gas in the tank to 1.8 MPa. Close the valves D and E upon completion of the compression.

<Operation Procedure 4>

Open the valve F, and feed water to a high pressure tank having a larger capacity by a high pressure booster pump, to compress the gas. Compress the inside of a high pressure tank having a smaller capacity to 10 MPa. Further, open the valves D and E to discharge water in the high pressure tank having a greater capacity to the low pressure tank, in order to attain compression to a high pressure of 2 to 20 MPa. Then, close the valves D and E upon completion of the discharge. Operation of this operation procedure 4 is repeated until a predetermined pressure is attained. In accordance with this procedure, a high pressure compression test at 20 to 200 kgf/cm$^2$ was carried out actually, and no explosion occurred.
From this experiment proved that a conventional mixture gas of hydrogen and oxygen explodes when the pressure reaches 3 kgf/cm$^2$ while a gas composed of hydrogen and oxygen obtained by electrolysis of water under vibratory agitation does not explode.

<Leakage Test>

On October 8, 2003, a "gas composed of hydrogen and oxygen obtained by electrolysis under vibratory agitation" was filled in a gas cylinder made of stainless steel (SUS304), with the gas compressed to a high pressure of 100 kgf/cm$^2$ and further cooled (to such a temperature that does not cause liquidizing). The gas maintained in this state was stored for about half year until March 8, 2004. In this while, 100 kgf/cm$^2$ was kept pointed on a pressure meter gauge and never changed.
Screw parts of a pressure meter set on the gas cylinder were sealed with ordinary Teflon (registered trademark) member. It was confirmed that there was no gas leakage at all from those parts.
Compared with a usual case of pure hydrogen which easily causes leakage to decrease the pressure, a gas composed of hydrogen and oxygen obtained by electrolysis under vibratory agitation is found to have an excellent storage property. This fact also suggests that hydrogen and oxygen are not independently in gas states but there is a possibility of existence of a new compound of hydrogen and oxygen.

<Drop Test>

A gas composed of hydrogen and oxygen was filled in the gas cylinder made of stainless steel under 1 MPa, and the gas cylinder was dropped from a position at a height of 5 m. No phenomenon like an explosion occurred.
A gas cylinder (3.8 L) made of stainless steel filled with a gas composed of hydrogen and oxygen and compressed to 10 MPa was put on a car. The car was driven to go round at a circuit track several times in particular premises while applying the same vibration as on ordinary roads until the car reached a velocity of 200 km/hour. No trouble was found concerning the gas cylinder and the pressure of the filled gas.

<Combustion Test>

(1) Combustion test on high melting point metal:

FIGS. 9 to 11 represent burning states of metals having a high melting point. A device represented in FIG. 7 was used for the combustion test.
A photograph in FIG. 8 shows a state of flames of a gas composed of hydrogen and oxygen obtained by electrolysis under vibratory agitation, and shows a sandwich structure in which a blue flame of hydrogen is sandwiched between red flames of oxygen. Flames involved no explosion and calmly showed a bluish white burning state.
FIG. 9 represents a case that a gas composed of hydrogen and oxygen was burnt with a distance of about 10 mm maintained between a titanium (melting point: 1667°C) plate and a flame of the gas burning. The titanium plate was melted and gasified instantaneously.
FIG. 10 represents a case that a gas composed of hydrogen and oxygen was burnt with a distance of about 10 mm maintained between a tantalum (melting point: 2980°C) plate and a flame of the gas burning. The tantalum plate was melted and gasified in two to three seconds.
FIG. 11 represents a case that a gas composed of hydrogen and oxygen was burnt with a distance of about 10 mm maintained between a tungsten (melting point: 3380°C) rod and a flame of the gas burning. The tungsten rod was melted and gasified in two to three seconds.
Size of the plates and rod used in the test were as follows.

$$\text{Titanium plate: } 15 \text{ mm} \times 150 \text{ mm} \times 0.5 \text{ mm (t)}$$

$$\text{Tantalum plate: } 15 \text{ mm} \times 150 \text{ mm} \times 1.0 \text{ mm (t)}$$

$$\text{Tungsten rod: } 3.2 \text{ mm } \phi$$

These members were cut test peaces, and thicker plates can be cut into pieces by the flame of the gas burning in actuality.
A burning temperature of the conventional mixture gas of hydrogen and oxygen gases is regarded to be about 1200 to 2500°C though the burning temperature varies depending on a mixing ratio. At this burning temperature, tantalum or tungsten cannot be melted. In the above combustion test, the burning temperature was set to be higher by 1000 to 2000°C than that of the conventional mixture gas.
A burning temperature of this gas composed of hydrogen and oxygen obtained by electrolysis under vibratory agitation is as relatively low as about 600 to 700°C. As described above, the gas can exhibit high energy depending on target objects.
The gas composed of hydrogen and oxygen obtained by electrolysis under vibratory agitation according to the present invention burns without consuming oxygen in the atmospheric air. As a result, combustion heat generation at a discharge port of a burner was so small that the discharge port could be touched by hands without feeling hot just after the completion of the combustion test. This can be regarded to suggest that, in case of the gas composed of hydrogen and oxygen obtained by electrolysis under vibratory agitation, a chemical reaction occurs from a mechanism different from a mechanism of the conventional combustion reaction of a heat generation type.

(2) Cost comparison in a steel plate fusion cutting test

For references, Table 1 presents a cost comparison between cases of cutting steel plates (12 mm) respectively by using a gas composed of hydrogen and oxygen obtained by electrolysis under vibratory agitation, and an acetylene gas. The gas composed of hydrogen and oxygen obtained by electrolysis under vibratory agitation was found to result in cost reduction by half, compared with the case of using an acetylene gas.

[Table 1]

| | Manufacturing cost for gas consumed | Cost for oxygen used | Total cost |
|---|---|---|---|
| Acetylene gas | ¥18.7 | ¥57.7 (115 liters used) | ¥76.4 |
| Gas composed of hydrogen and oxygen obtained by electrolysis under vibratory agitation | ¥1.19 | ¥32.95 (65.9 liters used) | ¥34.14 |

Concerning use of oxygen, oxygen in a commercially available oxygen gas cylinder was used when burning the acetylene gas. When burning a gas composed of hydrogen and oxygen obtained by electrolysis under vibratory agitation, oxygen as a component of the gas was used.

In order to accurately specify components, developments in a dedicated analysis device had to be brought into view. As a temporary measure, as long as liquidizing could be realized at an ultralow temperature, there was a possibility of proving existence of new molecules. A special dedicated cooling device capable of cooling to -260°C was developed and manufactured, to liquidize the gas composed of hydrogen and oxygen according to the present invention.

This liquidizing device was designed to display and record a cooling temperature and a pressure of a gas on real time, and had noteworthy features that an inspection window of about 40 mmφ was provided at a lower part of the device, and that a transparent grass tube of about 15 mmφ for containing a liquid was set inside, so that a state of liquidizing start, conditions of a liquid, and color tones could be observed on real time with eyes through the inspection window from the outside of the device.

Observation with eyes was intended to prevent mistakes in data analysis dependent only on pressures and temperatures because of the new gas.

Next, a new dedicated liquidizing device was manufactured for the gas according to the present invention, and a preliminary liquidizing test was carried out for each of a single oxygen gas and a single hydrogen gas.

[1] Liquidizing a single oxygen gas

1) Before flowing a pure oxygen gas into the device, the inside of the device was cooled to -150°C in advance. An oxygen gas was flowed into the cooled device under 0.2 MPa at a gas flow rate of 200 scc/min (standard cc/min). A liquidizing test of oxygen was carried out by decreasing the cooling temperature gradually in steps of 0.01°C.

2) Liquidizing started from -183°C exactly according to a theoretical value and could be observed with eyes from the inspection window. A liquid thereof looked transparently light blue.

3) As the temperature was further decreased, it was observed with eyes that crystal of liquid oxygen from near -225°C started depositing, and the entire liquid oxygen crystallized at about -230°C.

4) After confirming the above, the temperature was gradually increased to completely gasify oxygen.

[2] Liquidizing a single hydrogen gas:

1) As in the case of oxygen, the inside of the device was cooled to -240°C in advance. A hydrogen gas was subjected to a hydrogen liquidizing test under 0.2 MPa at a gas flow rate of 200 scc/min while decreasing the cooling temperature gradually in steps of 0.01°C. Then, liquidizing which started from about -252.5°C exactly according to a theoretical value could be observed with eyes from the inspection window.

2) A color tone of the liquid looked colorless and transparent.

3) After decreasing the temperature to about -255°C, the temperature was increased gradually to gasify all hydrogen. A preliminary test was thus finished.

[3] Liquidizing test of a gas composed of hydrogen and oxygen and regasifying test of the liquidized gas according to the present invention:

1) As in the preliminary test, the inside of the device was cooled to -150°C in advance. A gas composed of hydrogen and oxygen according to the present invention was flowed into the device under 0.2 MPa at a gas flow rate of 200 scc/min while decreasing the temperature gradually in steps of 0.01°C. Then, liquidizing started from -178.89°C, and a "colorless transparent liquid" could be observed with eyes.

2) Although the temperature was gradually decreased, the liquid stayed as liquid and caused no deposition of crystal even at -225°C at which crystal of liquid oxygen starts depositing.

3) Further, the temperature was decreased to -255°C. However, the liquid yet stayed as liquid, and crystal was not observed at all.

4) Thereafter, the temperature was gradually increased to gasify the gas composed of hydrogen and oxygen according to the present invention, which was stored into the gas cylinder. The regasified gas was burnt, and a flame thereof was brought into contact with, for example, titanium metal. Then, the metal was observed to instantaneously sparkle and gasify.

[4] Liquidizing test of a mixture gas of hydrogen and oxygen

1) In order to clarify that the liquid material or gas composed of hydrogen and oxygen according to the present invention differs from a mixture of hydrogen and oxygen, a commercially available hydrogen gas and a commercially available oxygen gas were mixed up in a manner as described below, and were liquidized in a manner as described above. A liquidizing temperature thereof was measured, and a color of the liquidized material was observed. Proper setting of pressures is considered to principally contribute to safe completion of such a test. This fact was a discovery.

2) As in the preliminary test, the inside of the device was cooled to -150°C in advance. Thereafter, a commercially available hydrogen gas and a commercially available oxygen gas were flowed into the device under 0.2 MPa at gas flow rates respectively adjusted to 200 scc/min for hydrogen and 100 scc/min for oxygen while decreasing the temperature gradually in steps of 0.01°C. Then, liquidizing started from -182.50°C, and a "liquid of light blue which is a color of liquid oxygen" could be observed with eyes.

3) Although the temperature was gradually decreased, the liquid stayed as liquid and caused no deposition of crystal even at -225°C at which crystal of liquid oxygen starts depositing.

4) Further, the temperature was decreased to -250°C. However, the liquid yet stayed as liquid, and crystal was not observed at all.

5) From the above, as expected, the liquid material or gas composed of hydrogen and oxygen according to the present invention was proved to differ from a mixture of hydrogen and oxygen.

[5] Liquidizing a gas composed of hydrogen and oxygen generated by electrolysis of water and regasifying the liquidized gas:

Liquidizing and regasifying are not limited to the gas generation unit described above but may be applied to a gas generated from any other gas generation unit.

[6] Conclusion:

The followings are features of the liquid material or gas composed of hydrogen and oxygen according to the present invention, which have been confirmed through the above experiments. It is worth notice that the existence of a new compound of hydrogen and oxygen is demonstrated.
a) A liquidizing temperature thereof is about -179°C which is a "higher temperature" by about 4°C than that of oxygen.

b) A liquid thereof has a "colorless transparent" color tone.

c) "No crystallization" occurs at a ultralow temperature of -255°C.

d) The liquid material composed of hydrogen and oxygen according to the present invention starts gasifying when the temperature increases to be higher than the liquidizing temperature. A regasified gas is considered to maintain substantially the same energy as before being gasified.

e) Conventionally, oxygen and hydrogen generated from electrolysis of water are considered to form a mixture gas thereof. However, the gas composed of hydrogen and oxygen according to the present invention is considered to be a compound forming a completely "new bond of oxygen and hydrogen" from the various tests described above.

**Claims**

1. A method for manufacturing a liquid material composed of hydrogen and oxygen, wherein an electrolytic solution containing an electrolyte of 5 to 30 weight % is electrolyzed in an electrolytic bath by use of an electrode group provided at an interval of 3 to 10 mm in the electrolytic bath under conditions of an electric current density of 5 to 20 A/dm$^2$, a bath temperature of 20 to 70°C, and strong alkali, while subjecting the electrolytic solution to vibratory agitation, and a gas composed of hydrogen and oxygen which is thereby generated is liquidized by cooling.

2. The method for manufacturing a liquid material composed of hydrogen and oxygen according to claim 1, wherein, when liquidizing the gas composed of hydrogen and oxygen, cooling is performed with the pressure of the gas set at 0.1 to 0.5 MPa.

3. The method for manufacturing a liquid material composed of hydrogen and oxygen according to claim 1, wherein, when liquidizing the gas composed of hydrogen and oxygen, cooling to -190 to -250°C is performed.

4. The method for manufacturing a liquid material composed of hydrogen and oxygen according to claim 1, wherein the condition of strong alkali corresponds to pH 14 or more.

5. A device for manufacturing a liquid material composed of hydrogen and oxygen, the device being used for practicing the method for manufacturing the liquid material according to claim 1, the device comprising:

   (A) an electrolytic bath;
   (B) an electrode group provided at an interval of 3 to 10 mm in the electrolytic bath;
   (C) a vibratory agitation unit for subjecting an electrolytic solution in the electrolytic bath to vibratory agitation;
   (D) a unit for collecting a generated gas composed of hydrogen and oxygen; and
   (E) a unit for liquidizing the collected gas composed of hydrogen and oxygen by cooling.

6. A liquid material composed of hydrogen and oxygen, which is manufactured by the method for manufacturing the liquid material composed of hydrogen and oxygen according to claim 1.

7. A liquid material composed of hydrogen and oxygen, wherein the hydrogen and oxygen exist as liquid materials under conditions of -190 to -250°C and 3 to 300 kgf/cm$^2$.

8. A method for manufacturing a regasified gas composed of hydrogen and oxygen, wherein the liquid material composed of hydrogen and oxygen, which is manufactured by the method for manufacturing the liquid material composed of hydrogen and oxygen according to claim 1, is stored and thereafter gasified.

9. The method for manufacturing a regasified gas composed of hydrogen and oxygen according to claim 8, wherein heating is performed when gasifying the liquid material composed of hydrogen and oxygen.

10. The method for manufacturing a regasified gas composed of hydrogen and oxygen according to claim 9, wherein the temperature of the liquid material is returned to a normal temperature by the heating.

11. A device for manufacturing a regasified gas composed of hydrogen and oxygen, the device being used for practicing the method for manufacturing a regasified gas composed of hydrogen and oxygen according to claim 8, the device comprising:

   (A) an electrolytic bath;
   (B) an electrode group provided at an interval of 3 to 10 mm in the electrolytic bath;
   (C) a vibratory agitation unit for subjecting an electrolytic solution in the electrolytic bath to vibratory agitation;
   (D) a unit for collecting a generated gas composed of hydrogen and oxygen;
   (E) a unit for liquidizing the collected gas composed of hydrogen and oxygen by cooling;
   (F) a unit for storing a liquid material obtained by the unit for liquidizing, and
   (G) a unit for regasifying the liquid material.

12. A regasified gas composed of hydrogen and oxygen, which is manufactured by the method for manufacturing the regasified gas composed of hydrogen and oxygen according to claim 8.

**13.** The regasified gas composed of hydrogen and oxygen according to claim 12, wherein hydrogen and oxygen do not substantially react with each other under a pressure of 3 to 300 kgf/cm$^2$ but exist stably in gas states in a metal container.

**14.** A fuel which is composed at least one of the liquid material composed of hydrogen and oxygen according to claim 6 or 7 and the regasified gas composed of hydrogen and oxygen according to claim 12, and generates no carbonic acid gas at all while burning.

## FIG.1

Vibration motor

Electrolytic bath

Alcohol bath

Electrodes

Vibration blades

Pressure sensor

Flashback arrester

(940)

Diode, Heat radiator

Fan

Transformer

## FIG.2

Electric equipment

Check valve

Safety valve

600

800

**FIG.3**

**FIG.4**

FIG.5

FIG.6

EP 2 319 958 A1

High pressure tank (MAX 20MPa)
0. 5 L

Compressed gas outlet port

Valve

High pressure tank (MAX 12MPa)
3. 7 8 L

Hydrogen, oxygen gas generation device

Valve
B

Valve
D

Valve
I

Valve
H

Valve
F

Valve
E

Low pressure tank
(MAX 2MPa)
3 8 L

High pressure booster pump

Valve
C

Valve
A

Low pressure booster pump

Water tank

FIG.7

Pressure range

－０．１～０　５ＭＰａ

Vacuum pump

Stem seal O-ring type full bore ball valve

Check valve

Safety valve

F

P

P

Burner

Flashback arrest

Tank

Alcohol bath

Water electrolytic bath

EP 2 319 958 A1

FIG.8

FIG.9

FIG.10

FIG.11

| INTERNATIONAL SEARCH REPORT | | International application No. |
|---|---|---|
| | | PCT/JP2009/059126 |

A.  CLASSIFICATION OF SUBJECT MATTER
*C25B1/04*(2006.01)i, *C01B3/04*(2006.01)i

According to International Patent Classification (IPC) or to both national classification and IPC

B.  FIELDS SEARCHED

Minimum documentation searched (classification system followed by classification symbols)
C25B1/04, C01B3/04

Documentation searched other than minimum documentation to the extent that such documents are included in the fields searched
|  |  |  |  |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2005-232512 A  (Japan Techno Co., Ltd.),<br>02 September, 2005 (02.09.05),<br>Claims; Par. Nos. [0029] to [0194]<br>(Family: none) | 12-14<br>1-11 |
| Y | JP 3018790 U  (Genkyo E),<br>13 September, 1995 (13.09.95),<br>Par. Nos. [0010] to [0015]<br>(Family: none) | 1-11 |

| ☐ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 June, 2009 (17.06.09) | 30 June, 2009 (30.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3037633 U
- JP 2002348694 A
- WO 021490G21 A1
- WO 03048424 A1
- JP 2005232512 A
- JP 1941498 A
- JP 2707530 B
- JP 2762388 B
- JP 2767771 B
- JP 2852878 B
- JP 2911350 B
- JP 2911393 B
- JP 3035114 B

- JP 3142417 B
- JP 3196890 B
- JP 332084 A
- JP 3854006 B
- JP 10309453 A
- JP 11253782 A
- JP 2000317295 A
- JP 2001288591 A
- JP 2002053999 A
- JP 2002121699 A
- JP 2002146597 A
- WO 02090621 A1
- WO 2004092059 A1